# EUROPEAN PATENT SPECIFICATION

(11) **EP 3 217 301 B1**
(45) Date of publication and mention of the grant of the patent: **20.02.2019**
(21) Application number: 17159712.3
(22) Date of filing: 07.03.2017
(51) Int. Cl.: G06F 17/30

(54) **PROPAGATION OF DATA CHANGES IN A DISTRIBUTED SYSTEM**
AUSBREITUNG VON DATENVERÄNDERUNGEN IN EINEM VERTEILTEN SYSTEM
PROPAGATION DE MODIFICATIONS DE DONNÉES DANS UN SYSTÈME DISTRIBUÉ

(30) Priority: 07.03.2016 US 201615062763
(43) Date of publication of application: 13.09.2017
(73) Proprietor: ResearchGate GmbH, 10115 Berlin (DE)
(72) Inventor: WOSCHITZ, Janosch, 10243 Berlin (DE); BILOKUROV, Kyryl, 8134 Adiswil (CH); HÄUSLER, Michael, 10115 Berlin (DE); FICKENSCHER, Horst, 10437 Berlin (DE); KLEEN, Michael, 12045 Berlin (DE)
(74) Representative: Schwegman Lundberg Woessner Limited

(56) References cited:
- WO-A2-2004/013725
- US-A1- 2015 019 487

## Description

### BACKGROUND

In distributed computing systems, data can be stored in multiple data repositories, and local copies of data items, or portions thereof, can be maintained by multiple system components, such as multiple services, that utilize the data in various ways. For example, in an online social network and publication system, user profiles, publications such as research articles, user feedback on the publications in the form of, e.g., reviews, ratings, or comments, postings in discussion fora, and other data may be stored, by the system components that generate the data, in one or more databases and/or file repositories. From these data repositories (the "source components"), other system components (the "target components") operating on the data, such as search services, data warehouses, etc. may retrieve the data and, to speed up processing, store local copies thereof. When the data is changed in the source components, the changes generally need to be propagated to the various target components. For many applications, it is important that the target system store the latest, most recent version of the data. However, various factors can make it difficult for target systems to store the latest and most recent data.

Some systems for propagating updates can require that certain updated self-contained data items (e.g., a text document) be passed around in their entirety among various systems, resulting in high memory usage and slow system updates. This can also result in, or exacerbate lost update problems, because when updates are passed around in their entirety, loss of an update becomes more common and is more difficult to recover from. Updates to data can also become lost when systems go down due to power loss or other causes.

US2015/0019487 discloses a method for the transfer of data from a source server to a target server. During the transfer any modification to the data records are recorded and are applied to the transferred data after the initial transfer is complete.

### SUMMARY

The present invention provides a method and computer system for propagating changes to data records among components of a distributed computing system.

### BRIEF DESCRIPTION OF DRAWINGS

Some embodiments are illustrated by way of example and not limitation in the figures of the accompanying drawings in which:
FIG. 1 is a block diagram depicting a social-network and publication system, according to an example embodiment.
FIG. 2 is a block diagram illustrating in more detail components of a system for propagating publication changes in accordance with various

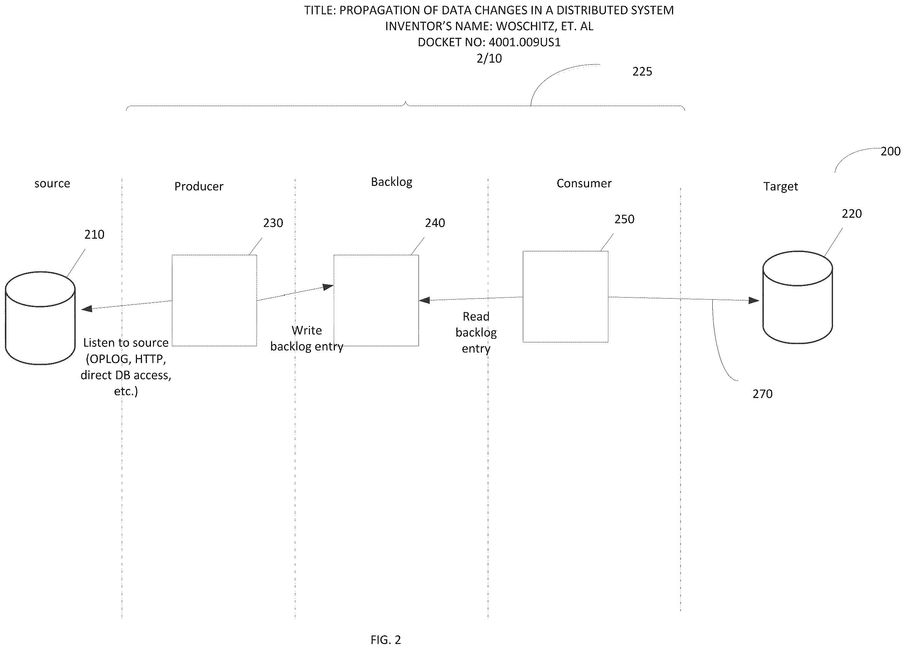

FIG. 2 is a block diagram illustrating in more detail components of a system for propagating publication changes in accordance with various embodiments.

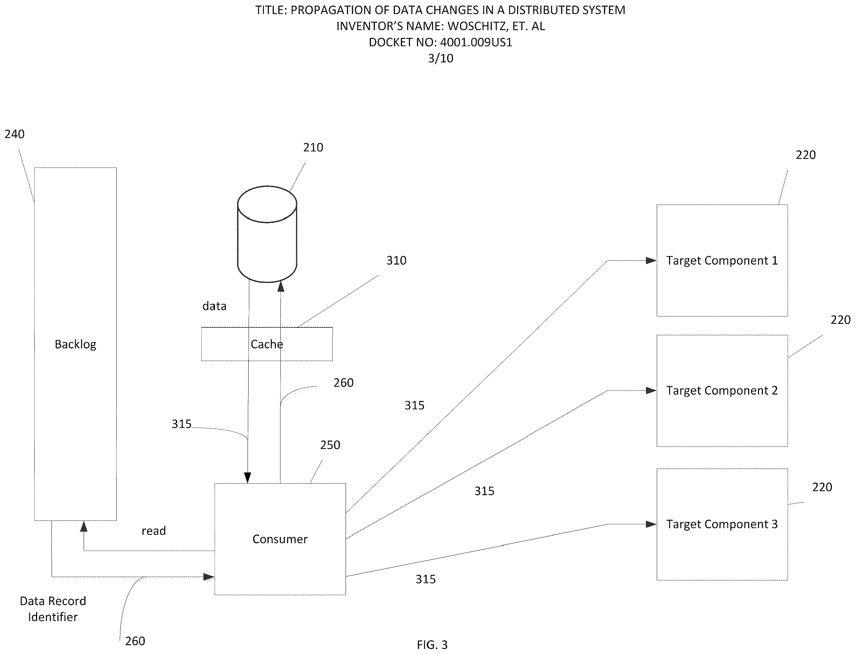

FIG. 3 is a block diagram depicting further detail regarding a consumer in accordance with various embodiments.

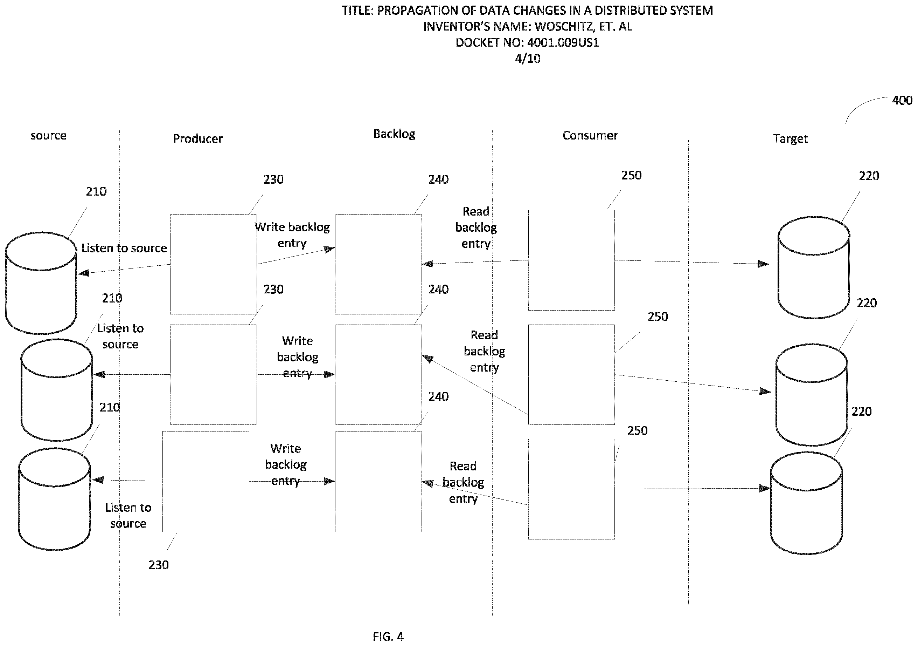

FIG. 4 is a block diagram of a system for propagating data changes that includes multiple sources, multiple producers, multiple backlogs, multiple consumers, and multiple targets in accordance with various embodiments.

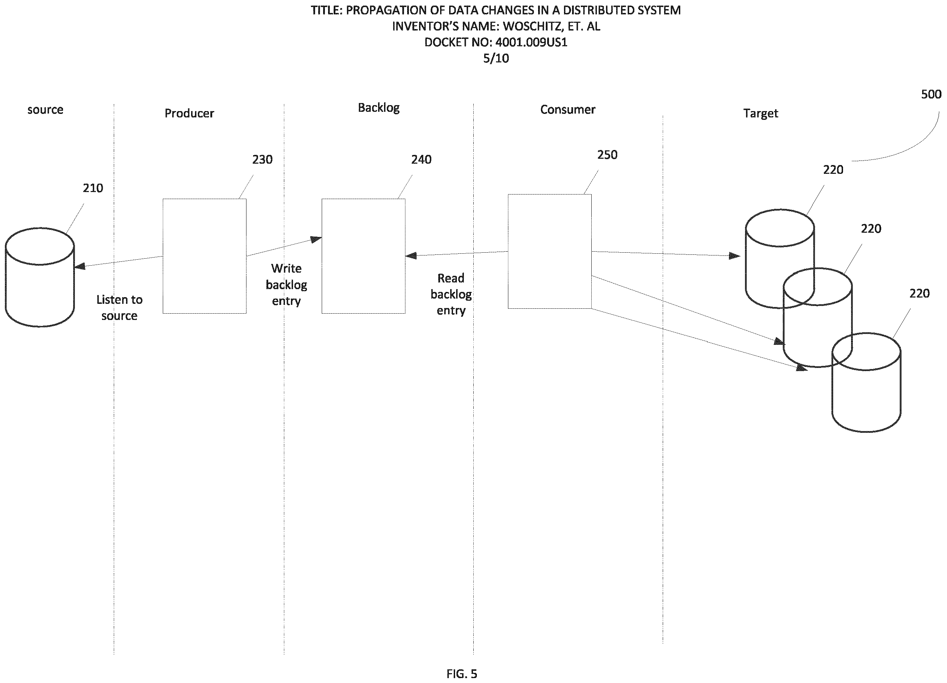

FIG. 5 is a block diagram of a system for propagating data changes that includes one source, one producer, one backlog, one consumer, and multiple targets in accordance with various embodiments.

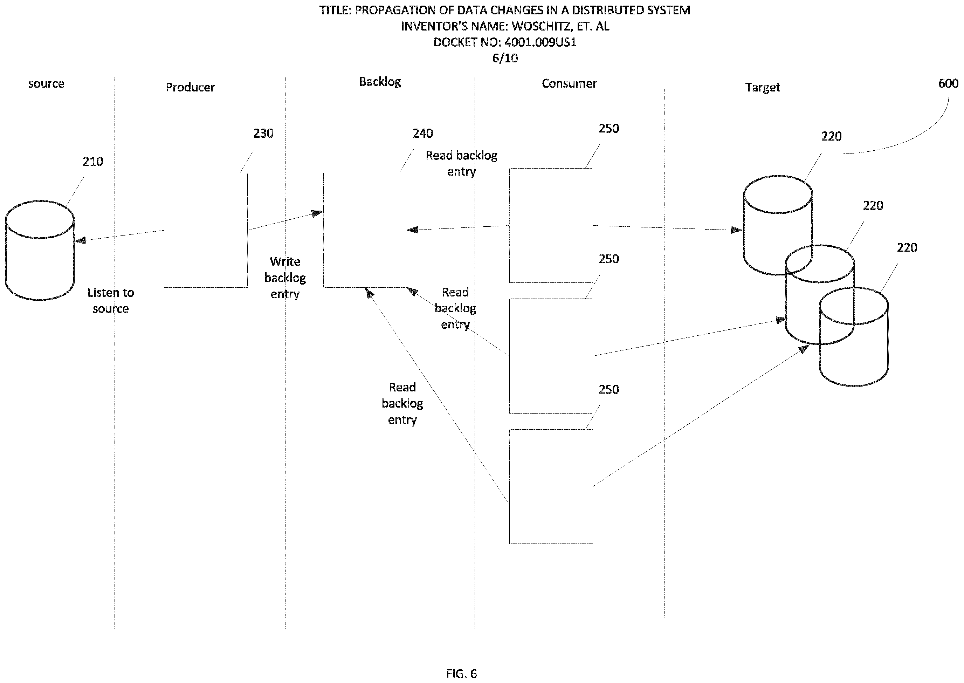

FIG. 6 is a block diagram of a system for propagating data changes that includes one source, one producer, one backlog, multiple consumers, and multiple targets in accordance with various embodiments.

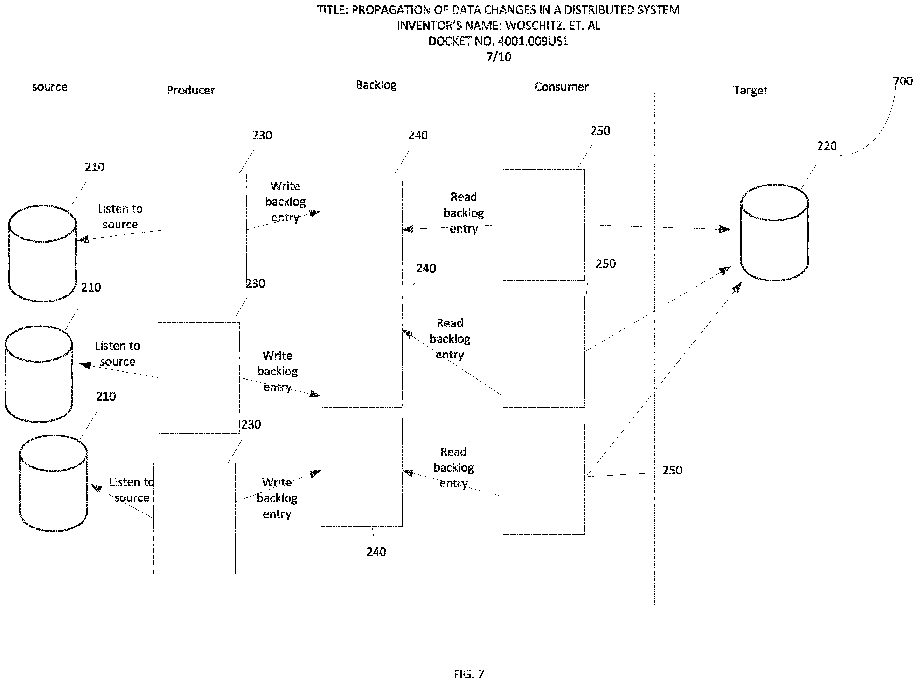

FIG. 7 is a block diagram of a system for propagating data changes that includes multiple sources, multiple producers, multiple backlogs, multiple consumers, and one target in accordance with various embodiments.

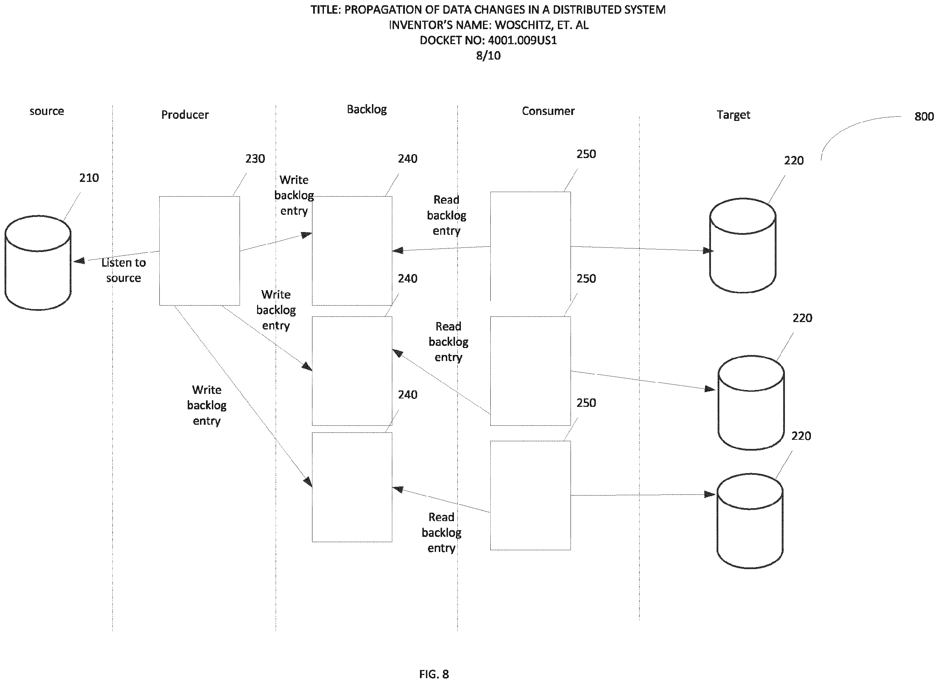

FIG. 8 is a block diagram of a system for propagating data changes that includes one source, one producer, multiple backlogs, multiple consumers, and multiple targets in accordance with various embodiments.

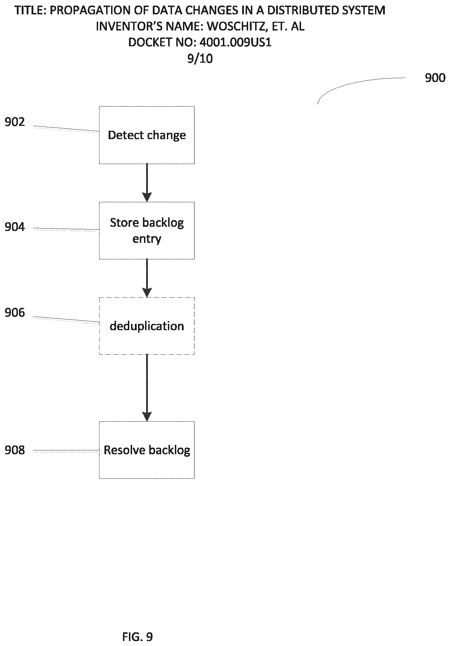

FIG. 9 is a flow chart illustrating a method for propagating data changes among components of a distributed computing system in accordance with various embodiments.

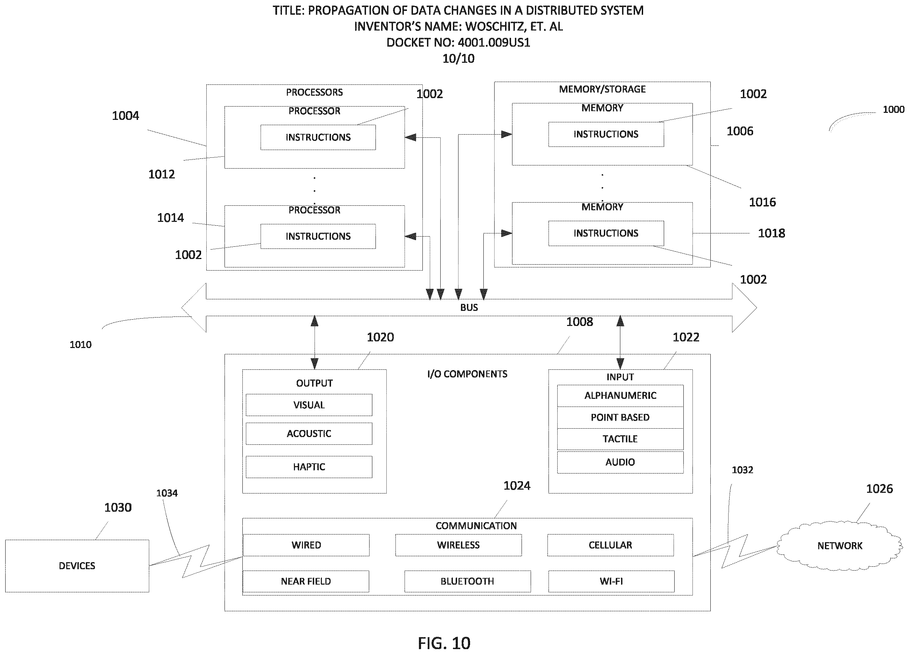

FIG. 10 is a block diagram of a machine in the form of a computer system within which a set of instructions for causing the machine to perform any one or more of the methodologies discussed herein may be executed, in accordance with various embodiments.

### DESCRIPTION

Disclosed herein are systems and methods for propagating changes in data, such as publications or other documents, from source components to target components. In various embodiments, systems and methods are provided for ensuring that target components such as search services, recommendation services, data warehouses, etc., can obtain and/or maintain the latest version, or a latest version that serves the purposes of the target component, of the data without the need to consume time and bandwidth by passing around full copies of the data. Systems and methods further allow for avoiding lost update problems and other issues. Example embodiments provide more efficient version propagation, while also optionally permitting centralized monitoring and tracking of version propagation.

Various embodiments utilize a data-conveyor system that acts as a broker between source components and target components. Embodiments make use of a change-logging scheme that combines unique identifiers for the changed data records (such as publications or other documents, or portions thereof) with time stamps to identify changed data for purposes of resolving the changed data and providing them to target components.

The following description will describe these and other features in more detail with reference to various example embodiments. It will be evident to one skilled in the art that the features and characteristics of the different embodiments can be used in various combinations, and that not every embodiment need include all of the features disclosed. Further, while various embodiments are described in the context of asocial network and publication system, the data-conveyor system is generally applicable to any kind of distributed computing system where data can generally be generated and consumed by different system components, creating a need to propagate changes from source components to target components.

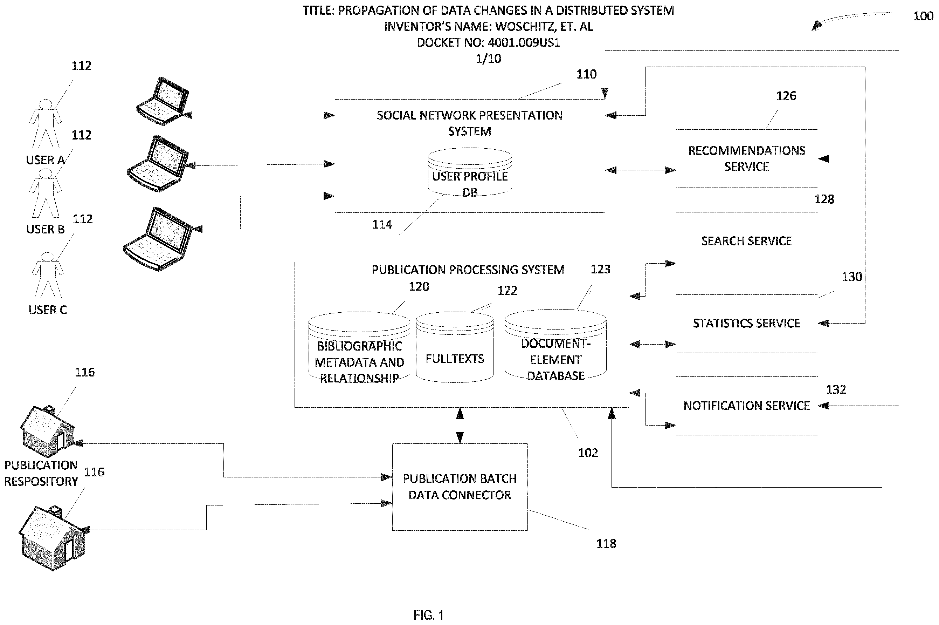

Various example embodiments will now be described with reference to the accompanying drawings. For context, refer to FIG. 1, which depicts an example social-network and publication system 100 in which changes to data are propagated from source components to target components, in accordance herewith. The system 100 includes, at its front-end, a social network presentation (sub-) system 110 through which users 112 interact with each other as well as with the content stored in the system 100. At the back-end, a publication processing (sub-)system 102 processes and stores documents and related content and metadata as well as citations and user-interaction data, such that the publication processing system 102 or components thereof can act as source components. Various optional associated subsystems, such as a recommendations service 126 and a search service 128 use the data in further analysis tiers to compute, e.g., recommendation scores or search scores. The recommendation service 126, search service 128, and any additional optional systems can act as target components. For example, one additional optional system can include a statistics service 130 for providing statistics regarding any interaction with the social network, for example, publications views or views of other objects, interactions with content, "following" of publications, downloads of full text, additions of reviews, etc. Another additional optional system can include a notification service 132 for notifying users of events in the social network. Some of these events can include a full-text edit to publications, a comment added to a review, a review added to a publication, etc. The various subsystems 102, 110, 126, 128, 130, and 132 may be implemented on one or more computers (e.g., general-purpose computers executing software that provides the functionality described herein), such as a single server machine or a server farm with multiple machines that communicate with one another via a network (e.g., an intranet).

In some embodiments, user-profile information may be stored within a user-profile database 114 maintained, e.g., in the social network presentation system 110, as shown, or in the publication processing system 102. The user-profile database 114 can accordingly act as a source component, for which changes thereof are propagated to target components in accordance with various embodiments. The user-profile database 114 can also act as a target component, for instance, to update a user's profile when publications processed by the publication processing system 102 or related components are newly assigned to that user as author.

Once registered, a user may have the ability, via a user interface of the social network presentation system 110, to upload his research publications or other documents to the system 100. Alternatively or additionally, the system 100 may conduct a batch import of publications, e.g., by downloading them from openly accessible third-party publication repositories 116 (e.g., as provided on the web sites of many universities), and subsequently allow its users to link their publications to their profile by claiming authorship (or co-authorship). Batch-import functionality may be provided by a publication batch data connector 118. In either case, uploads of research publications or other documents can be detected by a data conveyor, and the uploads can be propagated to target components by the data conveyor, as described in more detail later herein.

Further, in some embodiments, a user 112 may input the publication contents in a structured form used by the system 100, instead of uploading a single full-text file for the publication. Changes can be propagated to target components by the data conveyor, as described in more detail later herein. A "publication," as used herein, may be a work already published by a third party (i.e., outside the social-network environment) (to the extent allowed by copyright law), such as an academic article included in a scientific journal, or, alternatively, a (perhaps preliminary) work first published within the social-network environment, such as a draft of an academic article that has not yet been submitted for publication to any journal (and may not be intended for such submission). The publication is generally stored in the system 100 in the form of one or more publication data objects, such as data structures (e.g., tables, records, or entries within a database) and/or data files. For example, in some embodiments, a publication is dissected into multiple individually addressable elements (e.g., sub-titled sections, paragraphs, figures, tables, etc.) that are represented as entries of a document-element database 123. Some of the elements, such as images, may be stored (e.g., in binary form) in a separate file repository 122 and linked to by the database entries of the respective elements. In addition, the full-text of a publication may be stored as a file (e.g., a pdf document) in the file repository 122. Changes to any of the document elements or groups of elements, and the uploads of any files (publications, images, etc.), can be propagated to target components by the data conveyor, as described in more detail later herein.

The publication processing system 102 may further extract and store metadata uniquely identifying each publication (such as the authors, title, and other bibliographic information). The publication metadata, and optionally links to full-text documents as stored in the file repository 122, may be stored in a publication database 120. Changes to the metadata can likewise be propagated to target components by the data conveyor as described in more detail later herein.

The dissection of the document into multiple constituent elements may allow changes to individual constituent elements. Changes to any of these particular portions of the publication can be propagated to target components by the data conveyor as described in more detail later herein. In conjunction with suitable version identifiers or time stamps, storing different versions of individual document elements, rather than of the entire document, allows reconstructing the history of a document without unnecessarily duplicating stored content.

The system-internal representation of documents as a plurality of individually addressable document elements, in accordance with various embodiments, further facilitates propagating, by the data conveyor system described below, changes to the content at the level of these document elements.

While some of the components of the system 100 have been described as acting primarily as source components or primarily as target components, it should be understood that data can, in principle, flow both into and out from each component. Whether a given component acts as a source or target, thus, depends on the particular individual transaction (and can change between transactions) and is not fixed based on the component itself (that is, its overall functionality and position with the larger system 100).

Having provided an overview of an example system 100, example implementations of certain data conveyor components for propagating data updates will now be described in more detail. FIG. 2 is a block diagram illustrating in more detail components of a system 200 in which data changes can be propagated in accordance with various embodiments. The system 200 includes at least one source component 210. The source component 210 can include a relational database or a non-relational database (e.g., MongoDB™, supported by 10gen of Palo Alto, California, USA) through which users 112 interact with each other as well as with the content stored in the system 200. In embodiments, the source component/s 210 can include one or more of the publication database 120, file repository 122, and document-element database 123 described earlier herein with reference to FIG. 1, in addition to other data repositories or systems. While one source component 210 is shown, embodiments are not limited thereto, and embodiments can include several source components 210.

The system 200 may provide functionality through a variety of target components 220. For example, one target component 220 can provide search functionality through a search service similar to the search system 128 (FIG. 1) that allows users to search for publications of interest based on, for example, the field of research, the author's name, or specific citation information. Such a target component 220 can be implemented as a Solr database, available from Apache Software Foundation of Forest Hills, Maryland, USA. Alternatively or additionally, a target component 220 may automatically provide a list of potential publications of interest based on the user's profile (which may include, e.g., a list of his research interests and/or a list of his own publications) and/or other user-specific information (e.g., his prior search and browsing history within the network). Alternatively or additionally, a target component 220 can provide data warehousing services using, for example, Apache HBase™.

In some embodiments, users 112 have the ability to interact with a publication, for instance, by modifying the publication in some manner, or the publication can be modified by other parties or entities. In this context, example embodiments provide systems and methods for propagating changes to the publication to various target components 220. In other embodiments, it may become necessary to perform scheduled or *ad hoc* synchronization processes that can detect changes to publications and re-process those changes throughout, or in various parts of, the system 200. In any or all of these situations, down time should be minimized, and bandwidth should be conserved. Further, because the entire updates are not being passed around, storage and processing time can be conserved.

The system 200 further includes a data-conveyor (sub-) system 225 that propagates changes in the at least one source component 210 to the target component(s) 220. The data-conveyor system 225 includes one or more producers 230, backlogs 240, and consumers 250. The example illustration given in FIG. 2 will be discussed with reference to only one of each of a source component 210, producer 230, backlog 240, consumer 250, and target component 220; systems having different numbers and combinations of various elements will be discussed later herein with reference to FIGs. 4-8.

The producer 230 acts as a listener, or "ear," on at least one source component 210 to detect changes to data records (e.g., documents, publications, or portions thereof). The source component 210 (e.g., a Mongo database as described earlier) may implement an operations log (oplog) that buffers all "writes" to the source component 210. The producer 230 may listen to this oplog to detect changes and other activities that happen in the source component 210 storage layer.

There are various ways, in addition to the oplog, for listening to a source component 210 to listen for changes. For example, in some embodiments, a source component 210 may include a hypertext transfer protocol (HTTP) endpoint, rather than an oplog, and the producer 230 (or another producer 230) may listen to that HTTP endpoint for changes. Each producer 230 can use one of multiple mechanisms to listen to a source component. Additionally, data changes can be signalled across other channels including HTTP post, direct MongoDB (or other database) access, activity on an event bus, a file being placed in a directory, etc.

Changes can occur, for example, if a new keyword or tag is added for a publication or other document or user profile, or if a publication is updated or changed. In at least these examples, one or more target components 220 may need to be updated. For example, a search service target component or recommendation service target component may need updating. In the example of a search service target component, the search service target component may include local storage that is highly optimized for full-text search. The local storage holds knowledge of all publications known to the search service target component. If a publication is updated anywhere in the system 100, the search service target component would need to be informed of updates in order to deliver accurate results. As an additional example, a data warehouse target component acts as a storage or "basement" for storing data, wherein the data is deposited by systems and methods in accordance with various embodiments, and aggregated historical data may be retrieved at a later time for in-depth analysis of that data. A recommendations service target component can include other data structures optimized for recommendation, having a data pipeline that is updated in batches by systems and methods acting in accordance with various embodiments.

Upon detecting changes, the producer 230 writes a backlog entry to at least one backlog 240. In various embodiments, the backlog entry does not include contents of the data record. A backlog 240, in the context of various embodiments, includes entries for all of the changes to data records (or a subset of available data records) that have happened since a given point in time. A backlog 240 does not include the actual data changes themselves, but rather identifiers, described later herein, that indicate the location of the changes. Because the actual changes are not stored, lost update problems are avoided. Lost update problems can occur, for example, when two updating pieces of information contain the changing data, and one piece is consumed before the other, so that one update is lost and actual data is lost. However, in embodiments, since no actual data is consumed or transferred, the update will never be lost. At worst, the mere fact that an update has occurred may become lost.

The producer 230 can write to a separate backlog 240 for each source type or for each data type. For example, one backlog 240 can be provided for publications, a second backlog 240 can be provided for comments on publications, etc. In at least these embodiments, by writing to separate backlogs 240, the producer 230, and the overall system 200, can help ensure quality of service (QoS) independently per source component 210. Alternatively, the producer 230 can write to a single backlog 240. In at least those embodiments, the producer 230 or overall system 200 can allow cross-source consistency.

The producer 230 can detect a change, generated by the source component 210 to a data record stored by the source component 210. Upon detecting this change, the producer 230 will store a backlog entry to the backlog 240. In embodiments, the backlog entry includes a data record identifier 260 that identifies the data record in which the change occurred, and a time stamp indicating a time at which the backlog entry is being stored to the backlog 240. As mentioned earlier, the backlog entry does not include contents of the data record.

The producer 230 can detect multiple changes to multiple data records, and store backlog entries that identify that there was a change and the time at which the change occurred. In any case, each backlog entry will include a corresponding time stamp identifying when the respective backlog entry was stored in the backlog 240. The producer 230 can store separate backlog entries for each of the plurality of changes to a backlog 240 based on a respective corresponding data record identifier 260. The producer 230 can detect changes generated by multiple source components 210. The producer 230 can store backlog entries for changes generated by different ones of the source components 210 to separate respective backlogs 240 or to a single backlog 240.

In certain embodiments, the data record identifiers 260 each include a "strong entity" (or "key") and a "weak entity." A strong entity stands on its own and maps to a particular self-contained piece of data such as, e.g., a publication (which may be identified, e.g., by its associated metadata), whereas a weak entity only exists (and may be unique only) in relation to a strong entity. For example, the strong entity may be structured as a domain-identifying prefix, such as "PB" in the case of publications (or "PR" for profiles, "RE" for reviews, "IN" for interactions, etc.), followed by a domain-internal unique identifier, such as "1001," such that publication 1001 is identified by key "PB:1001." In some instances, the data item includes one or more individually identifiable sub-items, here "assets," that are themselves not structured and are stored, e.g., as a file; for example, a publication (the data item) may include multiple separately stored figures. These assets are identified by weak entities. The second asset within data 1001 (which may be, e.g., a figure) may be referenced as "PA:2" following the strong entity portion, i.e., as "PB:1001:PA:2." Accordingly, the data record identifier 260 uniquely identifies each object within a domain. Backlogs 240 can include backlog entries of one or more data types, where a data type is expressed, e.g., by the prefix within the data record identifier 260 within the backlog entry that identifies which object has been changed.

Subsequent to storing a backlog entry or group of backlog entries, the backlog 240, or another system acting on the backlog 240, may perform operations according to at least one criterion or group of criteria to deduplicate backlog entries that relate to the same data record. For example, deduplication can be based on comparison of time stamps of respective backlog entries. Accordingly, if other (older, i.e., redundant) backlog entries for the same data record identifier have not yet been processed, these older or redundant backlog entries can be removed from the backlog. Other criteria for deduplication can be based on, for example, storage size limits for at least one backlog 240, detection of an overload condition in at least one component of the system 100, etc.

In some instances, deduplication need not be performed. Deduplication may be unnecessary, for example, if a consumer 250 is able to keep up with the pace of data record changes, as evidenced when the backlog 240 is constantly empty, or contains less than a threshold number (e.g., 1000) entries, wherein the threshold number may be adaptable based on data type, historical statistics, etc. Deduplication may be considered if the size of the backlog 240 has grown over a time period. However, other criteria or thresholds can be used for determining whether a consumer 250 is able to keep up with the pace of data record changes, and embodiments are not limited to any particular algorithm or criterion. In some situations, deduplication is not performed and backlog entries will reflect the complete history of state changes in data records. All transitions between state changes will be represented and processed. On the other hand, if a consumer 250 is lagging behind or is detected to be under load then deduplication may be performed. This allows only more recent or relevant backlog entries to be processed, and only relevant transitions resulting in final changes will be represented and need to be processed. Other consumers 250 may need to know of all changes, so deduplication need not be performed, while another subset of consumers 250 may specify that they only need to know of latest changes to data records.

A consumer 250 will resolve backlog entries to provide updates as needed to one or more target components 220. A consumer 250 can store a watermark (not shown in FIG. 2) that represents the backlog entry of a respective backlog 240 that was last consumed by that consumer 250, based on the time stamp of the backlog entry. Watermarks can be used to determine whether a consumer 250 is up-to-date to a specific watermark. In cases where a consumer services multiple target components 220 (e.g., as described below with reference to FIG. 5), the consumer can store multiple separate watermarks for the multiple respective target components 220. Methods in accordance with various examples can use that watermark in case of, for example, a power failure, so that database transactions only have to be rolled back to the last watermark. Backlog entries before a particular watermark can be discarded if, for example, storage size of the backlog 240 becomes too large, according to any predetermined or *ad hoc* criteria for a fixed size of the backlog 240.

As mentioned earlier, the system 200 can include multiple source components 210, multiple producers 230, multiple consumers 250 and multiple backlogs 240, in combinations described in more detail later herein. A consumer 250 will resolve backlog entries, starting with the entry corresponding to the watermark, by retrieving updated data of a data record identified in the backlog entries from a source component 210. The updated data may be, e.g., the updated data record in its entirety, only the portion of the data record that was changed, or a portion of the data record that is of interest to the target 220 (and that may include changed and/or unchanged data). The consumer 250 uses a data record identifier 260 to retrieve, or read and retrieve a portion of, the current up-to-date version of the data record indicated by the data record identifier 260. The consumer 250 may also detect during this process that a data record has been deleted. The up-to-date data record or portion thereof 270 is then copied or replicated to at least one target component 220, or deleted from at least one target component 220. In some embodiments, different consumers 250 can read from one backlog 240, to provide different subsets of updates to different target components 220. For example, one consumer 250 can retrieve only updates related to publication titles, to provide to target components 220 corresponding to search services that search based on only title. It will be appreciated, therefore, that different consumers 250 may retrieve various different subsets of updates that are of interest to a wide variety of search engines, data warehouse systems, recommendation services, etc. In selectively reading the backlog, the consumer 250 may be able to take advantage of keys as described above that indicate the domain of the data item (allowing, e.g., for distinguishing between publications and comments) and/or include weak entities attached to a strong entity (e.g., a file, a figure, a comment, etc.) which only exists in relation to the strong entity (e.g., a publication).

Lost update problems can occur, with conventional methods for propagating data changes, when target components 220 and source components 210 are distributed over several systems or machines, because distributed systems are not designed to guarantee a specific order of execution of various updating operations, for example database update operations. Distributed systems typically are not synchronized, and network lag and network overload, exacerbated by frequent database updates, can mean that a first data update may not be fully realized on target components before a conflicting or non-conflicting data update overtakes the first update. Accordingly, the first update may become "lost." As mentioned earlier herein, use of backlog entries in accordance with various embodiments can help prevent or mitigate lost update problems. Because the backlog entries have no content other than data record identifiers 260 and a timestamp, there is no actual change information in the backlog entry. If a backlog entry or even an entire backlog 240 are lost, the actual updated data is not lost. Instead, only indications of updates are lost.

As briefly mentioned earlier, systems and methods in accordance with various embodiments can be used in a consistency repair scenario, during a scheduled update or after loss of a system due to power outage, etc. In at least such scenarios, target components 220 may need to be resynchronized with original source components 210 that are continuously creating data. Systems and methods in accordance with various embodiments can "replay" data from a known point to recreate data entities and records at the target components 220 that match the most current data from the original source components 210. In some embodiments, the entity conveyor system 225 can detect changes that occurred in data records of a source component 210 while that source component was not connected to the entity conveyor system 225 (e.g., due to failure of the producer 230 associated with the source component 210), and trigger processing of those changes (e.g., via a different producer 230 than the producer 230 that was being used before loss of outage, or via the same producer 230 once it is operational again). Given a known time of disconnection of the source component 210 from the entity conveyor 225, the data record changes that require processing because they occurred after the time of disconnection may be identified, e.g., based on time stamps for the changes as stored in the database in association with the changed data records.

In some embodiments, if a backlog 240 fails or is deleted, the data conveyor would do a compare between the source components 210 and target components 220 to detect differences, and producer/s 230 would then write an indication that there was a difference to the backlog/s 240 as backlog entries. As described earlier herein, the backlog entries will include an identifier of a document or data where the difference was found, and the backlog entries will not include actual data or the actual difference. Consumer/s 250 would then read from backlog/s 240 and resolve the entries into the updated data records for providing to the target component/s 220.

In order to propagate changes selectively between source and target components, filtering can be done by any various components of the system 200. In some embodiments, filtering can be done by a consumer 250 by consuming the entirety of one or more backlogs 240 and discarding any updates not needed by a target component 220 associated with that consumer 250. In other embodiments, multiple backlogs 240 can be provided to include subsets of updates that are of interested to a consumer 250 or a target component 220, and a consumer 250 can resolve backlog entries of backlogs 240 that include updates of interest to a target associated with that consumer 250. In still other embodiments, a target component 220 can receive all updates and discard those that are not of interest, though these embodiments may be relatively inefficient.

FIG. 3 is a block diagram depicting further detail regarding a consumer 250 in accordance with various embodiments. During resolution, the consumer 250 can make use of a cache 310 because of the clear access pattern brought about by use of simple data record identifiers 260. In other words, the access pattern provided by the consumer 250 includes a query for the current state of all data for a particular document identified by a document identifier 260, rather than being queries for various different strings. The consumer 250 reads the backlog 240 to retrieve the data-record identifiers 260 of data records that have changed since a given time. The data-record identifier 260 is provided to the source component 210, the respective data record (or portion thereof) 315 is returned, and the consumer 250 provides the data record 315 to one or more target components 220. The target components 220 may include one or more services that process the received data records 315 and write them to local databases or repositories associated with the respective target components 220. Alternatively or additionally, the target components 220 may include one or more databases to which the data records 315 can be written directly via database-specific transformers that convert the data records 315 into formats used by the respective databases.

The consumer 250 can verify per-target constraints (e.g., schema validation) of each particular data record 315 being resolved. This can allow instant alerting about incompatibilities of target components 220, while allowing continued delivery to compatible target components 220. In at least these embodiments, when an update to a data record changes a data record schema (e.g., by adding a new field to a database entry representing a data record), the consumer 250, upon performing schema validation of the data record, will alert target components 220 that the schema has changed. In such instances, failures or exceptions caused by incompatible data records can be avoided at the target component 220. In some embodiments, the consumer 250 will refrain from forwarding the updated data (e.g., the updated data record or portion thereof) 315 to incompatible target components. Alternatively, in some embodiments, the consumer 250 will provide only a portion of the updated data that is unaffected by the detected change to the schema to the target component. The consumer 250 may notify an associated producer 230 or source component 210 that the consumer 250 has refrained from forwarding the updated data, while providing a reason for the refraining. Notifications may be provided to users 112 (FIG. 1) using the social network presentation system 110 or other notifications can be provided in other various embodiments. In some embodiments, the consumer 250 may continue to read and resolve backlog entries and forward data for compatible data record updates (e.g., data record updates for which the schema has not changed), while logging the failures detected in schema validation.

As briefly mentioned above, some target components 220 may not be interested in being notified or receiving all updates. Accordingly, multiple consumers 250, multiple backlogs 240, multiple producers 230, or a combination thereof, may be provided to listen only to some updates, to write backlog entries for only some updates, or to consume only some updates, to provide a subset of updates to various target components 220 according to their need. The granularity with which the system 200 can react to updates to source component 210 can be refined to any level needed by the target component 220.

Systems in accordance with various embodiments will include at least one producer 230 per source component 210 to write updates to at least one backlog 240. Additionally, systems in accordance with various embodiments can include multiple consumers 250. Various combinations of one or multiples of system 200 components are described with reference to FIG. 4-8 herein. Not all possible combinations are described, and it will be appreciated that any combination of one or multiples of any or all of a source component 210, producer 230, backlog 240, consumer 250, or target component 220 can be provided. For example, in some embodiments, a system 200 can include multiple producers 230 per source component 210. One of these producers 230 can write all updates to one backlog 240 and another producer 230 can write only a subset of updates to a different backlog 240. Accordingly, multiple producers 230 on the same source component 210 can tailor different backlogs for different target components 220.

FIG. 4 is a block diagram of a system 400, in accordance with various embodiments, for propagating data changes from multiple source components 210 to multiple target components 220 via multiple separate data conveyor systems 225. This system 400 illustrates a basic example in which each target component 220 is interested in updates from exactly one source component 210, and therefore one producer 230 listens to a corresponding one source component 210 to write updates to exactly one backlog 240. The consumer 250 resolves all entries of a respective exactly one backlog 240 to that target component 220.

FIG. 5 is a block diagram of a system 500 for propagating data changes from a single source component 210 to multiple target components 220, in accordance with various embodiments. Here, a single producer 230 checks for updates on the source component 210 and writes backlog entries to a single backlog 240, which accordingly holds all updates. A single consumer 250 resolves all backlog entries 240 and provides updated data to each target component 220. Filtering can be performed at each respective target component 220 based on interests of each respective target component 220. Alternatively, the consumer can selectively forward the updated data to the respective target components 220 based on their interests. If, for any reason, not all target components 220 are updated synchronously and the consumer 250 ceases to provide updates to one or more target components 220 (e.g., because these one or more components have become disconnected or otherwise unresponsive) while proceeding to resolve backlog entries and providing the respective data updates to other target components, the consumer may store watermarks for the one or more components for which backlog-entry consumption ceases, and resume resolving and consuming the backlog entries for each target component at a later time beginning at the respective watermark.

FIG. 6 is a block diagram of another system 600 for propagating data changes from a single source component 210 to multiple target components 220, in accordance with various embodiments. Here, like in the system 500 of FIG. 5, a single producer 230 checks for updates on that source component 210 and writes backlog entries to a single backlog 240, which accordingly holds all updates. However, instead of implementing filtering at the individual target components 220, here, multiple consumers 250 resolve backlog entries of interest to corresponding target components 220, and, accordingly, filtering can be done by each of the multiple consumers 250 before providing updated data records of interest to each target component 220.

FIG. 7 is a block diagram of a system 700 for propagating data changes from multiple source components 210 to a single target component 220, in accordance with various embodiments. The system 700 includes multiple source components 210 with multiple respective producers 230 writing to multiple respective backlogs 240. As shown, multiple consumers 250 resolve the entries of the respective backlogs 240 to the target component 220. In alternative embodiments, a single consumer 250 may read and resolve the entries of multiple (e.g., all) backlogs 240. The system 700 can be useful in at least cases in which the target component 220 includes a search service for providing search services of multiple source components 210, or any other target service interested in updates from multiple sources or types of sources. In some embodiments and systems served by various embodiments, the search index provided by a search services takes in information from multiple targets.

FIG. 8 is a block diagram of a system 800 for propagating data changes from a single source component to multiple target components 220, in accordance with various embodiments. In contrast to the systems 500, 600 of FIGS. 5 and 6 where filtering takes place at the level of the target components 220 or consumers 250, the system 800 separates out data record updates at the backlog level. A single producer 230 listening to data record updates in a single source component 210 writes backlog entries of interest to different target components 220 to separate respective backlogs 240, e.g., one backlog 240 for each respective target component 220. The producer 230 may, for example use a filter configured in accordance with the interests of the various target components 220 to select for each data record update the backlog 240, among the plurality of backlogs 240, to which an entry is to be written. A consumer 250 can be provided to resolve each backlog entry from a corresponding backlog 240 for its respective corresponding target component 220. The system 800 can be useful in at least cases in which different target components 220 are interested in different subsets or fields of data from a same source component 210.

It will be appreciated that the embodiments described above are not mutually exclusive, e.g., the embodiments can coexist in a single data conveyor system 100, singly or in combination. Further, other combinations of multiple sources, producers, backlogs, consumers, and targets can be contemplated without limitation. For example, splitting of data record updates from a single source component 210 between multiple backlogs 240, as depicted in FIG. 8, and forwarding updated data of data record updates recorded in multiple backlogs 240 to a single target component 220, as depicted in FIG. 7, can occur in the same system.

FIG. 9 is a flow chart illustrating a method 900 for propagating data changes among components of a distributed computing system in accordance with various embodiments. Discussion of the example method 900 is made with reference to elements and components of FIGs. 2-8.

The method 900 involves, at operation 902, detecting a change, generated by a source component 210 of a distributed computing system, to a data record stored by the source component 210. The method 900 can include, and in most embodiments will include, detecting a plurality of changes to the data records.

The method 900 continues with operation 904 with a producer 230 storing a backlog entry to at least one backlog 240 responsive to detecting the change. The backlog entry may include a data record identifier that identifies the data record and a time stamp indicating a time at which the backlog entry is being stored to the at least one backlog 240. In embodiments, the backlog entry does not include contents of the data record. Operation 904 can include, and in most embodiments will include storing backlog entries that identify multiple changes to the data record, wherein each backlog entry can include a corresponding time stamp identifying when the respective backlog entry was stored in the at least one backlog 240. In at least these embodiments, detecting multiple changes may include detecting changes generated by multiple source components, using various listening methods or the same listening method, as described earlier herein (e.g., oplogs, HTTP endpoints, direct database access, etc.).

As described earlier herein, deduplication operations can be performed in accordance with various criteria for deduplication. Accordingly, the example method 900 can include, in operation 906, removing at least one backlog entry corresponding to a data record, based on at least one criterion, to deduplicate backlog entries that relate to that data record. Criteria can include one or more of a storage size limit for the at least one backlog 240, comparison of time stamps of respective backlog entries, detection of an overload condition in at least one component of the distributed computing system, consumer 250-related criteria such as speed of operation of the consumer 250, etc.

The method 900 continues with operation 908 with a consumer 250 reading the backlog 240 and resolving the backlog entries, according to various embodiments described earlier herein, to one or more target components 220. As described earlier herein, the consumer may begin reading the backlog at an entry corresponding to a watermark set in the consumer. The consumer 250 will resolve a backlog entry by retrieving updated data, from a source component 210, of a data record indicated by the data record identifier 260 specified in the backlog entry. The consumer 250 may also detect during this process that a data record has been deleted. The updated data 270 (e.g., the entire up-to-date data record or a portion thereof) is then copied or replicated to at least one target component 220, or deleted from at least one target component 220. During the process of resolving backlog entries, it may happen that a target component 220 becomes unresponsive, e.g., due to hardware failure, power outage, overload condition, interfering service updates, etc. In this case, the consumer may automatically cease resolving the backlog entries. Thereafter, the consumer may periodically check whether the target component is responsive again, and once the target component 220 has become responsive again, the consumer may automatically resume the process of resolving backlog entries and providing the associated updated data to the target component 220. Beneficially, the process of ceasing and resuming resolving of the backlog entries happens during ongoing operation of other components of the entity conveyor system (e.g., the producer(s) can continue writing to the backlog(s) without interruption; the consumer can continue providing updated data to operational target components, etc.), and does not require human intervention.

As described earlier herein, the example method 900 can include storing, at least at one consumer 250, a watermark which represents the backlog entry of a respective backlog that was last consumed by the corresponding consumer 250. In at least these examples, the method 900 can include resolving a backlog entry by retrieving updated data of a data record that corresponds to the watermark from a source component 210. In embodiments, the method 900 can include detecting a change to a schema of a data record corresponding to a backlog entry. In at least these embodiments, the method 900 can include notifying at least one target component that the schema has been modified for the data record. In at least these embodiments, the method 900 can include, responsive to detecting the change to the schema, refraining from providing the updated data to the target component, and notifying at least one source component 210 that the updated data will not be provided to the target component. The notifying can include providing a reason based on the change to the schema.

FIG. 10 is a block diagram illustrating components of a machine 1000, according to some example embodiments, able to read instructions from a machine-readable medium (e.g., a machine-readable storage medium) and perform any one or more of the methodologies discussed herein. Specifically, FIG. 10 shows a diagrammatic representation of the machine 1000 in the example form of a computer system within which instructions 1002 (e.g., software, a program, an application, an applet, an app, or other executable code) for causing the machine 1000 to perform any one or more of the methodologies discussed herein may be executed. For example, the instructions may cause the machine to implement operations of a producer 230, backlog 240, or consumer 250 shown in any of FIGs. 2-8. The instructions 1002 transform the general, non-programmed machine into a particular machine programmed to carry out the described and illustrated functions in the manner described. In alternative embodiments, the machine 1000 operates as a standalone device or may be coupled (e.g., networked) to other machines. In a networked deployment, the machine 1000 may operate in the capacity of a server machine or a client machine in a server-client network environment, or as a peer machine in a peer-to-peer (or distributed) network environment. The machine 1000 may comprise, but not be limited to, a server computer, a client computer, a personal computer (PC), a tablet computer, a laptop computer, a netbook, a set-top box (STB), a personal digital assistant (PDA), a mobile device, a web appliance, or any machine capable of executing the instructions 1002, sequentially or otherwise, that specify actions to be taken by machine 1000. Further, while only a single machine 1000 is illustrated, the term "machine" shall also be taken to include a collection of machines 1000 that individually or jointly execute the instructions 1002 to perform any one or more of the methodologies discussed herein.

The machine 1000 may include processors 1004, memory 1006, and I/O components 1008, which may be configured to communicate with each other such as via a bus 1010. In an example embodiment, the processors 1004 (e.g., a Central Processing Unit (CPU), a Reduced Instruction Set Computing (RISC) processor, a Complex Instruction Set Computing (CISC) processor, a Graphics Processing Unit (GPU), a Digital Signal Processor (DSP), an Application Specific Integrated Circuit (ASIC), a Radio-Frequency Integrated Circuit (RFIC), another processor, or any suitable combination thereof) may include, for example, processor 1012 and processor 1014 that may execute instructions 1002. The term "processor" is intended to include multi-core processor that may comprise two or more independent processors (sometimes referred to as "cores") that may execute instructions contemporaneously. Although FIG. 10 shows multiple processors, the machine 1000 may include a single processor with a single core, a single processor with multiple cores (e.g., a multi-core process), multiple processors with a single core, multiple processors with multiples cores, or any combination thereof.

The memory/storage 1006 may include a memory 1016, such as a main memory, or other memory storage, and a storage unit 1018, both accessible to the processors 1004 such as via the bus 1010. The storage unit 1018 and memory 1016 store the instructions 1002 embodying any one or more of the methodologies or functions described herein. The instructions 1002 may also reside, completely or partially, within the memory 1016, within the storage unit 1018, within at least one of the processors 1004 (e.g., within the processor's cache memory), or any suitable combination thereof, during execution thereof by the machine 1000. Accordingly, the memory 1016, the storage unit 1018, and the memory of processors 1004 are examples of machine-readable media.

As used herein, "machine-readable medium" means a device able to store instructions and data temporarily or permanently and may include, but is not be limited to, random-access memory (RAM), read-only memory (ROM), buffer memory, flash memory, optical media, magnetic media, cache memory, other types of storage (e.g., Erasable Programmable Read-Only Memory (EEPROM)) and/or any suitable combination thereof. The term "machine-readable medium" should be taken to include a single medium or multiple media (e.g., a centralized or distributed database, or associated caches and servers) able to store instructions 1002. The term "machine-readable medium" shall also be taken to include any medium, or combination of multiple media, that is capable of storing or carrying instructions (e.g., instructions 1002) for execution by a machine (e.g., machine 1000), such that the instructions, when executed by one or more processors of the machine 1000 (e.g., processors 1004), cause the machine 1000 to perform any one or more of the methodologies described herein. Accordingly, a "machine-readable medium" refers to a single storage apparatus or device, as well as "cloud-based" storage systems or storage networks that include multiple storage apparatus or devices. The term "machine-readable medium" includes signals or transient media.

The I/O components 1008 may include a wide variety of components to receive input, provide output, produce output, transmit information, exchange information, and so on. The specific I/O components 1008 that are included in a particular machine will depend on the type of machine. For example, portable machines such as mobile phones will likely include a touch input device or other such input mechanisms, while a headless server machine will likely not include such a touch input device. It will be appreciated that the I/O components 1008 may include many other components that are not shown in FIG. 10. The I/O components 1008 are grouped according to functionality merely for simplifying the following discussion and the grouping is in no way limiting. In various example embodiments, the I/O components 1008 may include output components 1020 and input components 1022. The output components 1020 may include visual components (e.g., a display such as a plasma display panel (PDP), a light emitting diode (LED) display, a liquid crystal display (LCD), a projector, or a cathode ray tube (CRT)), acoustic components (e.g., speakers), haptic components (e.g., a vibratory motor, resistance mechanisms), other signal generators, and so forth. The input components 1022 may include alphanumeric input components (e.g., a keyboard, a touch screen configured to receive alphanumeric input, a photo-optical keyboard, or other alphanumeric input components), point-based input components (e.g., a mouse, a touchpad, a trackball, a joystick, a motion sensor, or other pointing instrument), tactile input components (e.g., a physical button, a touch screen that provides location and/or force of touches or touch gestures, or other tactile input components), audio input components (e.g., a microphone), and the like.

Communication may be implemented using a wide variety of technologies. The I/O components 1008 may include communication components 1024 operable to couple the machine 1000 to a network 1026 or devices 1030 via coupling 1032 and coupling 1034, respectively. For example, the communication components 1024 may include a network interface component or other suitable device to interface with the network 1026. In further examples, communication components 1024 may include wired communication components, wireless communication components, cellular communication components, Near Field Communication (NFC) components, Bluetooth® components (e.g., Bluetooth® Low Energy), Wi-Fi® components, and other communication components to provide communication via other modalities. The devices 1030 may be another machine or any of a wide variety of peripheral devices (e.g., a peripheral device coupled via a Universal Serial Bus (USB)).

A variety of information may be derived via the communication components 1024, such as, location via Internet Protocol (IP) geo-location, location via Wi-Fi® signal triangulation, location via detecting a NFC beacon signal that may indicate a particular location, and so forth.

In various example embodiments, one or more portions of the network 1026 may be an *ad hoc* network, an intranet, an extranet, a virtual private network (VPN), a local area network (LAN), a wireless LAN (WLAN), a wide area network (WAN), a wireless WAN (WWAN), a metropolitan area network (MAN), the Internet, a portion of the Internet, a portion of the Public Switched Telephone Network (PSTN), a plain old telephone service (POTS) network, a cellular telephone network, a wireless network, a Wi-Fi® network, another type of network, or a combination of two or more such networks. For example, the network 1026 or a portion of the network 1026 may include a wireless or cellular network and the coupling 1032 may be a Code Division Multiple Access (CDMA) connection, a Global System for Mobile communications (GSM) connection, or other type of cellular or wireless coupling. In this example, the coupling 1032 may implement any of a variety of types of data transfer technology, such as Single Carrier Radio Transmission Technology (1xRTT), Evolution-Data Optimized (EVDO) technology, General Packet Radio Service (GPRS) technology, Enhanced Data rates for GSM Evolution (EDGE) technology, third Generation Partnership Project (3GPP) including 3G, fourth generation wireless (4G) networks, Universal Mobile Telecommunications System (UMTS), High Speed Packet Access (HSPA), Worldwide Interoperability for Microwave Access (WiMAX), Long Term Evolution (LTE) standard, others defined by various standard setting organizations, other long range protocols, or other data transfer technology.

The instructions 1002 may be transmitted or received over the network 1026 using a transmission medium via a network interface device (e.g., a network interface component included in the communication components 1024) and utilizing any one of a number of well-known transfer protocols (e.g., hypertext transfer protocol (HTTP)). Similarly, the instructions 1002 may be transmitted or received using a transmission medium via the coupling 1034 (e.g., a peer-to-peer coupling) to devices 1030. The term "transmission medium" shall be taken to include any intangible medium that is capable of storing, encoding, or carrying instructions 1002 for execution by the machine 1000, and includes digital or analog communications signals or other intangible medium to facilitate communication of such software. A transmission medium is an embodiment of a machine-readable medium.

Certain embodiments are described herein as including a number of logic components or modules. Modules may constitute either software modules (e.g., code embodied on a non-transitory machine-readable medium) or hardware-implemented modules. A hardware-implemented module is tangible unit capable of performing certain operations and may be configured or arranged in a certain manner. In example embodiments, one or more computer systems (e.g., a standalone, client or server computer system) or one or more processors may be configured by software (e.g., an application or application portion) as a hardware-implemented module that operates to perform certain operations as described herein.

Data conveyor systems as described above can be customized to include any grouping of multiple or single source components 210, producers 230, backlogs 240, consumers 250, and target components 220, so that target components 220 can perform any functionalities desired with data (e.g., searching, displaying, storing, etc.)

In various embodiments, a hardware-implemented module may be implemented mechanically or electronically. For example, a hardware-implemented module may comprise dedicated circuitry or logic that is permanently configured (e.g., as a special-purpose processor, such as a field programmable gate array (FPGA) or an application-specific integrated circuit (ASIC)) to perform certain operations. A hardware-implemented module may also comprise programmable logic or circuitry (e.g., as encompassed within a general-purpose processor or other programmable processor) that is temporarily configured by software to perform certain operations. It will be appreciated that the decision to implement a hardware-implemented module mechanically, in dedicated and permanently configured circuitry, or in temporarily configured circuitry (e.g., configured by software) may be driven by cost and time considerations.

Accordingly, the term "hardware-implemented module" should be understood to encompass a tangible entity, be that an entity that is physically constructed, permanently configured (e.g., hardwired) or temporarily or transitorily configured (e.g., programmed) to operate in a certain manner and/or to perform certain operations described herein. Considering embodiments in which hardware-implemented modules are temporarily configured (e.g., programmed), each of the hardware-implemented modules need not be configured or instantiated at any one instance in time. For example, where the hardware-implemented modules comprise a general-purpose processor configured using software, the general-purpose processor may be configured as respective different hardware-implemented modules at different times. Software may accordingly configure a processor, for example, to constitute a particular hardware-implemented module at one instance of time and to constitute a different hardware-implemented module at a different instance of time.

Hardware-implemented modules can provide information to, and receive information from, other hardware-implemented modules. Accordingly, the described hardware-implemented modules may be regarded as being communicatively coupled. Where multiple of such hardware-implemented modules exist contemporaneously, communications may be achieved through signal transmission (e.g., over appropriate circuits and buses) that connect the hardware-implemented modules. In embodiments in which multiple hardware-implemented modules are configured or instantiated at different times, communications between such hardware-implemented modules may be achieved, for example, through the storage and retrieval of information in memory structures to which the multiple hardware-implemented modules have access. For example, one hardware-implemented module may perform an operation, and store the output of that operation in a memory device to which it is communicatively coupled. A further hardware-implemented module may then, at a later time, access the memory device to retrieve and process the stored output. Hardware-implemented modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may, in some example embodiments, comprise processor-implemented modules.

Similarly, the methods described herein may be at least partially processor-implemented. For example, at least some of the operations of a method may be performed by one or processors or processor-implemented modules. The performance of certain of the operations may be distributed among the one or more processors, not only residing within a single machine, but deployed across a number of machines. In some example embodiments, the processor or processors may be located in a single location (e.g., within a home environment, an office environment or as a server farm), while in other embodiments the processors may be distributed across a number of locations.

The one or more processors may also operate to support performance of the relevant operations in a "cloud computing" environment or as a "software as a service" (SaaS). For example, at least some of the operations may be performed by a group of computers (as examples of machines including processors), these operations being accessible via a network (e.g., the Internet) and via one or more appropriate interfaces (e.g., Application Program Interfaces (APIs).)

Example embodiments may be implemented in digital electronic circuitry, or in computer hardware, firmware, software, or in combinations of them. Example embodiments may be implemented using a computer program product, e.g., a computer program tangibly embodied in an information carrier, e.g., in a machine-readable medium for execution by, or to control the operation of, data processing apparatus, e.g., a programmable processor, a computer, or multiple computers.

A computer program can be written in any form of programming language, including compiled or interpreted languages, and it can be deployed in any form, including as a stand-alone program or as a module, subroutine, or other unit suitable for use in a computing environment. A computer program can be deployed to be executed on one computer or on multiple computers at one site or distributed across multiple sites and interconnected by a communication network.

In example embodiments, operations may be performed by one or more programmable processors executing a computer program to perform functions by operating on input data and generating output. Method operations can also be performed by, and apparatus of example embodiments may be implemented as, special purpose logic circuitry, e.g., a field programmable gate array (FPGA) or an application-specific integrated circuit (ASIC).

The computing system can include clients and servers. A client and server are generally remote from each other and typically interact through a communication network. The relationship of client and server arises by virtue of computer programs running on the respective computers and having a client-server relationship to each other. In embodiments deploying a programmable computing system, it will be appreciated that that both hardware and software architectures require consideration. Specifically, it will be appreciated that the choice of whether to implement certain functionality in permanently configured hardware (e.g., an ASIC), in temporarily configured hardware (e.g., a combination of software and a programmable processor), or a combination of permanently and temporarily configured hardware may be a design choice. Below are set out hardware (e.g., machine) and software architectures that may be deployed, in various example embodiments.

## Claims

1. A method for propagating changes to data records among components of a distributed computing system (200), the method comprising:
detecting (902) a plurality of changes, generated by a source component (210) of the distributed computing system (200), to a data record stored by the source component (210);
storing (904) backlog entries to at least one backlog (240) responsive to detecting the changes, the backlog entries including data record identifiers that each identify a location of the changed data record stored by the source component (210) and a time stamp indicating a time at which the backlog entry is being stored to the at least one backlog (240), wherein the backlog entry does not include contents of the data record;
deduplicating (906) backlog entries that relate to the same data record by comparing time stamps of respective backlog entries and removing one or more older backlog entries for the same data record stored in the at least one backlog (240);
resolving (908) a backlog entry by retrieving, from a source component (210), updated data of a data record identified in the backlog entry; and
providing the updated data to at least one target component (220).

2. The method of claim 1, wherein the deduplication is performed based on at least one criterion including at least one of:
a storage size limit for the at least one backlog (240); and
detection of an overload condition in at least one component of the distributed computing system (200).

3. The method of claim 1 or claim 2, further comprising:
detecting a plurality of changes to a plurality of data records; and
storing backlog entries for each of the plurality of changes to a separate backlog (240) based on a respective corresponding data record identifier.

4. The method of claim 3, further comprising:
detecting a plurality of changes generated by a plurality of source components (210); and
storing backlog entries for changes generated by different ones of the source components (210) to separate respective backlogs (240).

5. The method of claim 1, wherein the updated data is selectively provided to one or more target components (220), among a plurality of target components (220), that are interested in the updated data; and/or the method further comprising:
resolving a plurality of backlog entries;
automatically ceasing resolving upon detection that the at least one target component (220) is nonresponsive; and
automatically resuming resolving upon detecting that the at least one target component (220) is responsive again; or
wherein the at least one target component (220) includes at least one of a search service, a recommendation service, and a statistics service.

6. The method of claim 1, further comprising:
detecting a change to a schema of the data record identified in the backlog entry; and
notifying at least one target component (220) that the schema has been modified for the data record.

7. The method of claim 6, further comprising:
in response to the detection of the change to the schema, the updated data is not provided to at least one of the at least one target component (220).

8. The method of claim 7, further comprising:
notifying at least one source component (210) that the updated data will not be provided to at least one of the at least one target component (220), wherein the notifying includes providing a reason for the update not being provided to the at least one target component (220), the reason indicating that there has been a detected change to the schema of the data record identified in the backlog entry.

9. The method of any one of claims 6 to 8, further comprising:
providing only a portion of the updated data that is unaffected by the detected change to the schema to the at least one target component (220).

10. The method of any one of claims 1 to 8, wherein detecting the change includes at least one of:
detecting activity in an operations log of the source component (210),
detecting a hypertext transfer protocol post, or
direct database access performed on the source component (210); or
wherein when two or more producers (230) access the source component (210) to detect changes to data records stored by the source component (210), different ones of the producers (230) accessing the source component (210) use different respective access methods, the access methods are selected from a list including:
detecting a hypertext transfer protocol post;
detecting activity in an operations log; and
direct database access of the source component (210).

11. A computer system comprising:
at least one processor; and
a memory storing processor implementable instructions, which when implemented by the at least one processor, causes the at least one processor to carry out the method of any one of claims 1 to 10.

12. A machine-readable medium carrying instructions, which when executed by at least one processor of the machine, causes the machine to carry out the method of any one of claims 1 to 10.

## Patentansprüche

1. Verfahren zum Übertragen von Änderungen an Datensätzen zwischen Komponenten eines verteilten Computersystems (200), wobei das Verfahren umfasst:
Erfassen (902) einer Vielzahl von Änderungen, die von einer Quellkomponente (210) des verteilten Computersystems (200) an einem von der Quellkomponente (210) gespeicherten Datensatz erzeugt werden;
Speichern (904) von Backlog-Einträgen in mindestens einem Backlog (240), das auf das Erfassen der Änderungen anspricht, wobei die Backlog-Einträge Datensatzkennungen, die jeweils einen Ort des von der Quellkomponente (210) gespeicherten geänderten Datensatzes identifizieren, und einen Zeitstempel beinhalten, der einen Zeitpunkt angibt, zu dem der Backlog-Eintrag in dem mindestens einen Backlog (240) gespeichert wird, wobei der Backlog-Eintrag keine Inhalte des Datensatzes beinhaltet;
Deduplizieren (906) von Backlog-Einträgen, die sich auf denselben Datensatz beziehen, durch Vergleichen von Zeitstempeln der jeweiligen Backlog-Einträge und Entfernen eines oder mehrerer älterer Backlog-Einträge für denselben Datensatz, der in dem mindestens einen Backlog (240) gespeichert ist;
Auflösen (908) eines Backlog-Eintrags durch Abrufen aktualisierter Daten eines Datensatzes, der in dem Backlog-Eintrag identifiziert ist, aus einer Quellkomponente (210); und
Bereitstellen der aktualisierten Daten für mindestens eine Zielkomponente (220).

2. Verfahren nach Anspruch 1, wobei die Deduplizierung basierend auf mindestens einem Kriterium durchgeführt wird, das mindestens eines beinhaltet aus:
einer Speichergrößenbegrenzung für das mindestens eine Backlog (240); und
Erfassen einer Überlastungsbedingung in mindestens einer Komponente des verteilten Computersystems (200).

3. Verfahren nach Anspruch 1 oder Anspruch 2, weiter umfassend:
Erfassen einer Vielzahl von Änderungen an einer Vielzahl von Datensätzen; und
Speichern von Backlog-Einträgen für jede der Vielzahl von Änderungen an einem separaten Backlog (240) basierend auf einer jeweils entsprechenden Datensatzkennung.

4. Verfahren nach Anspruch 3, weiter umfassend:
Erfassen einer Vielzahl von Änderungen, die durch eine Vielzahl von Quellkomponenten (210) erzeugt werden; und
Speichern von Backlog-Einträgen für Änderungen, die von verschiedenen der Quellkomponenten (210) erzeugt werden, um die jeweiligen Backlogs (240) zu trennen.

5. Verfahren nach Anspruch 1, wobei die aktualisierten Daten selektiv einer oder mehreren Zielkomponenten (220) aus einer Vielzahl von Zielkomponenten (220) bereitgestellt werden, die an den aktualisierten Daten interessiert sind; und/oder wobei das Verfahren weiter umfasst:
Auflösen einer Vielzahl von Backlog-Einträgen;
automatisches Beenden des Auflösens, wenn erfasst wird, dass die mindestens eine Zielkomponente (220) nicht reagiert; und
automatische Wiederaufnahme des Auflösens nach dem Erfassen, dass die mindestens eine Zielkomponente (220) wieder reagiert; oder
wobei die mindestens eine Zielkomponente (220) mindestens einen von einem Suchdienst, einem Empfehlungsdienst und einem Statistikdienst beinhaltet.

6. Verfahren nach Anspruch 1, weiter umfassend:
Erfassen einer Änderung an einem Schema des im Backlog-Eintrag identifizierten Datensatzes; und
Benachrichtigen mindestens einer Zielkomponente (220), dass das Schema für den Datensatz geändert wurde.

7. Verfahren nach Anspruch 6, weiter umfassend:
als Reaktion auf das Erfassen der Änderung des Schemas die aktualisierten Daten nicht an mindestens eine der mindestens einen Zielkomponente (220) bereitgestellt werden.

8. Verfahren nach Anspruch 7, weiter umfassend:
Benachrichtigen mindestens einer Quellkomponente (210), dass die aktualisierten Daten nicht an mindestens eine der mindestens einen Zielkomponente (220) bereitgestellt werden, wobei das Benachrichtigen das Bereitstellen eines Grundes für das Nichtbereitstellen der Aktualisierung an die mindestens eine Zielkomponente (220) beinhaltet, wobei der Grund anzeigt, dass eine erfasste Änderung des Schemas des in dem Backlog-Eintrag identifizierten Datensatzes stattgefunden hat.

9. Verfahren nach einem der Ansprüche 6 bis 8, weiter umfassend:
Bereitstellen nur eines Teils der aktualisierten Daten, der von der erfassten Änderung des Schemas an die mindestens eine Zielkomponente (220) unbeeinflusst ist.

10. Verfahren nach einem der Ansprüche 1 bis 8, wobei das Erfassen der Änderung mindestens eines beinhaltet aus:
Erfassen der Aktivität in einem Operationsprotokoll der Quellkomponente (210),
Erfassen eines Hypertext-Übertragungsprotokoll-Posts, oder
direktem Datenbankzugriff, der auf die Quellkomponente (210) durchgeführt wird; oder
wobei, wenn zwei oder mehr Produzenten (230) auf die Quellkomponente (210) zugreifen, um Änderungen an den von der Quellkomponente (210) gespeicherten Datensätzen zu erfassen, verschiedene der Produzenten (230), die auf die Quellkomponente (210) zugreifen, unterschiedliche jeweilige Zugriffsverfahren verwenden, die Zugriffsverfahren aus einer Liste ausgewählt werden, die beinhaltet:
Erfassen eines Hypertext-Übertragungsprotokoll-Posts;
Erfassen von Aktivität in einem Betriebsprotokoll; und
direkten Datenbankzugriff auf die Quellkomponente (210).

11. Computersystem, umfassend:
mindestens einen Prozessor; und
einen Speicher, der prozessorimplementierbare Anweisungen speichert, die, wenn sie durch den mindestens einen Prozessor implementiert werden, bewirken, dass der mindestens eine Prozessor das Verfahren nach einem der Ansprüche 1 bis 10 durchführt.

12. Maschinenlesbares Medium, das Anweisungen enthält, die, wenn sie von mindestens einem Prozessor der Maschine ausgeführt werden, bewirken, dass die Maschine das Verfahren nach einem der Ansprüche 1 bis 10 durchführt.

## Revendications

1. Procédé pour propager des modifications à des enregistrements de données parmi des composants d'un système informatique distribué (200), le procédé comprenant :
détecter (902) une pluralité de modifications, générées par un composant source (210) du système informatique distribué (200), à un enregistrement de données stocké par le composant source (210) ;
stocker (904) des entrées d'arriéré dans au moins un arriéré (240) en réponse à la détection des modifications, les entrées d'arriéré incluant des identifiants d'enregistrement de données qui identifient chacun un emplacement de l'enregistrement de données modifié stocké par le composant source (210) et un horodatage indiquant une heure à laquelle l'entrée d'arriéré est stockée dans l'au moins un arriéré (240), dans lequel l'entrée d'arriéré n'inclue pas de contenus de l'enregistrement de données ;
dédupliquer (906) les entrées d'arriéré qui se rapportent au même enregistrement de données en comparant les horodatages des entrées d'arriéré respectives et supprimer une ou plusieurs entrées d'arriéré plus anciennes pour le même enregistrement de données stocké dans l'au moins un arriéré (240) ;
résoudre (908) une entrée d'arriéré en récupérant, à partir d'un composant source (210), des données mises à jour d'un enregistrement de données identifié dans l'entrée d'arriéré ; et
fournir les données mises à jour à au moins un composant cible (220).

2. Procédé selon la revendication 1, dans lequel la déduplication est effectuée sur la base d'au moins un critère incluant au moins l'une parmi :
une limite de taille de stockage pour l'au moins un arriéré (240) ; et
la détection d'une condition de surcharge dans au moins un composant du système informatique distribué (200).

3. Procédé selon la revendication 1 ou la revendication 2, comprenant en outre :
détecter une pluralité de modifications apportées à une pluralité d'enregistrements de données ; et
stocker des entrées d'arriéré pour chaque modification de la pluralité de modifications dans un arriéré séparé (240) sur la base d'un identifiant d'enregistrement de données correspondant respectif.

4. Procédé selon la revendication 3, comprenant en outre :
détecter une pluralité de modifications générées par une pluralité de composants de source (210) ; et
stocker des entrées d'arriéré pour des modifications générées par différents composants parmi les composants source (210) afin de séparer les arriérés respectifs (240).

5. Procédé selon la revendication 1, dans lequel les données mises à jour sont fournies sélectivement à un ou plusieurs composants cibles (220), parmi une pluralité de composants cibles (220), qui sont intéressés par les données mises à jour ; et/ou le procédé comprend en outre :
résoudre une pluralité d'entrées d'arriéré ;
cesser automatiquement la résolution s'il est détecté que l'au moins un composant cible (220) ne répond pas ; et
reprendre automatiquement la résolution s'il est détecté que l'au moins un composant cible (220) répond à nouveau ; ou
dans lequel l'au moins un composant cible (220) inclut au moins un service parmi un service de recherche, un service de recommandation et un service de statistiques.

6. Procédé selon la revendication 1, comprenant en outre :
détecter une modification d'un schéma de l'enregistrement de données identifié dans l'entrée d'arriéré ; et
notifier au moins un composant cible (220) que le schéma a été modifié pour l'enregistrement de données.

7. Procédé selon la revendication 6, comprenant en outre :
en réponse à la détection de la modification du schéma, les données mises à jour ne sont pas fournies à au moins un des au moins un composant cible (220).

8. Procédé selon la revendication 7, comprenant en outre :
notifier à au moins un composant source (210) que les données mises à jour ne seront pas fournies à au moins un des au moins un composant cible (220), dans lequel la notification inclut la fourniture d'une raison pour que la mise à jour ne soit pas fournie à l'au moins un composant cible (220), la raison indiquant qu'il y a eu une modification détectée du schéma de l'enregistrement de données identifié dans l'entrée d'arriéré.

9. Procédé selon l'une quelconque des revendications 6 à 8, comprenant en outre :
ne fournir qu'une partie des données mises à jour qui n'est pas affectée par la modification détectée du schéma à l'au moins un composant cible (220).

10. Procédé selon l'une quelconque des revendications 1 à 8, dans lequel la détection du changement inclut au moins l'un parmi :
la détection d'activité dans un journal d'opérations du composant source (210),
la détection d'un message de protocole de transfert hypertexte ; ou
l'accès direct à la base de données effectué sur le composant source (210) ; ou
dans lequel, lorsque deux ou plusieurs producteurs (230) accèdent au composant source (210) pour détecter des modifications apportées à des enregistrements de données stockés par le composant source (210), différents producteurs parmi les producteurs (230) accédant au composant source (210) utilisent différentes méthodes d'accès respectives, les méthodes d'accès sont sélectionnées dans une liste incluant :
la détection d'un message de protocole de transfert hypertexte ;
la détection d'activité dans un journal d'opérations ; et
l'accès direct à la base de données du composant source (210).

11. Système informatique comprenant :
au moins un processeur ; et
une mémoire contenant des instructions pouvant être mises en oeuvre par le processeur, qui, lorsqu'elles sont mises en oeuvre par l'au moins un processeur, font en sorte que l'au moins un processeur exécute le procédé selon l'une quelconque des revendications 1 à 10.

12. Support d'instructions pouvant être lu par une machine, qui, lorsqu'il est exécuté par au moins un processeur de la machine, amène la machine à mettre en oeuvre le procédé selon l'une quelconque des revendications 1 à 10.
